# EUROPEAN PATENT SPECIFICATION

(11) **EP 4 391 164 B1**
(45) Date of publication and mention of the grant of the patent: **10.06.2026**
(21) Application number: 22887655.3
(22) Date of filing: 27.10.2022
(51) Int. Cl.: H01M 10/04, H01M 50/109, H01M 50/153, H01M 50/167, H01M 50/169, H01M 50/186, H01M 50/559, H01M 50/586, H01M 50/593

(54) **TOP CAP ASSEMBLY AND BUTTON-TYPE SECONDARY BATTERY INCLUDING THE SAME**
OBERKAPPENANORDNUNG UND KNOPFARTIGE SEKUNDÄRBATTERIE DAMIT
ENSEMBLE CAPUCHON SUPÉRIEUR ET BATTERIE SECONDAIRE DE TYPE BOUTON LE COMPRENANT

(30) Priority: 27.10.2021 KR 20210145040
(43) Date of publication of application: 26.06.2024
(73) Proprietor: LG Energy Solution, Ltd., Seoul 07335 (KR)
(72) Inventor: KIM, Min Gyu, Daejeon 34122 (KR); SUNG, Joo Hwan, Daejeon 34122 (KR); CHO, Min Su, Daejeon 34122 (KR); PARK, Geun Young, Daejeon 34122 (KR)
(74) Representative: Hoffmann Eitle
(86) International application number: PCT/KR2022/016600
(87) International publication number: WO 2023/075460

(56) References cited:
- WO-A1-2020/138492
- CN-A- 108 232 051
- CN-A- 112 786 973
- CN-U- 212 434 725
- KR-A- 20150 096 045
- KR-B1- 100 795 681
- KR-B1- 101 689 215
- US-A1- 2016 285 057

## Description

### TECHNICAL FIELD

### CROSS-REFERENCE TO RELATED APPLICATION

The present application claims the benefit of the priority of Korean Patent Application No. 10-2021-0145040, filed on October 27, 2021.

### TECHNICAL FIELD

The present invention relates to a top cap assembly and a button-type secondary battery including the same, and more particularly, to a top cap assembly in which a stepped portion between a base plate and an electrode terminal is removed, and a welding point ascends to improve welding quality and assembly yield of the battery and minimize damage of an electrode assembly due to welding heat, thereby securing quality and stability of the battery, and a button-type secondary battery including the same.

### BACKGROUND ART

A secondary battery refers to a battery that is chargeable and dischargeable, unlike a primary battery that is not charged, and examples of the secondary battery may include a nickel cadmium battery, a nickel hydrogen battery, a lithium ion battery, and a lithium ion polymer battery. Such a secondary battery is being applied to be used in small-sized products such as digital cameras, notebooks, mobile phones, PDAs, E-bikes, and the like as well as large-sized products requiring high power such as electric vehicles and hybrid vehicles, power storage devices for storing surplus power or renewable energy, and backup power storage devices.

Such a secondary battery is classified into a pouch-type secondary battery and a can type secondary battery according to a material of a battery case accommodating an electrode assembly. In the pouch-type secondary battery, the electrode assembly is accommodated in a pouch made of a flexible polymer material having a variable shape. In addition, in the can-type secondary battery, an electrode assembly is accommodated in a case made of a metal or plastic material having a predetermined shape.

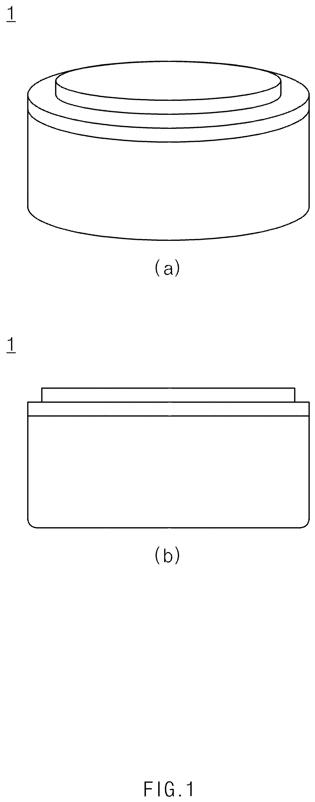

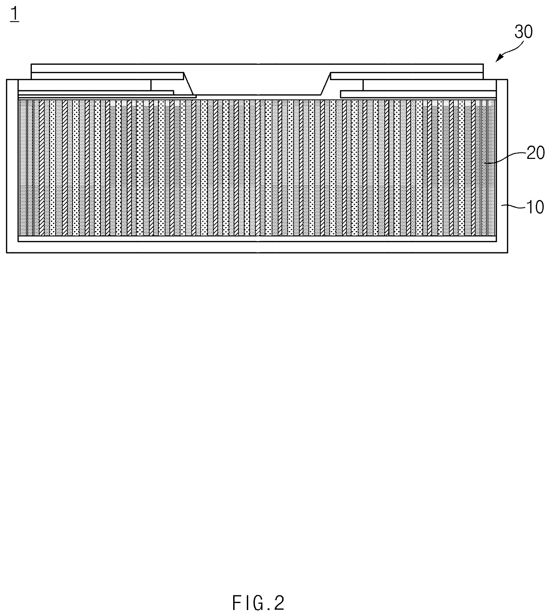

In the can-type secondary batteries, a small battery having a diameter greater than a height thereof is called a button-type secondary battery and is applied to electronic products such as various small wearable devices to supply power. (a) of FIG. 1 is a perspective view illustrating a button-type secondary battery according to the related art, (b) of FIG. 1 is a side view illustrating the button-type secondary battery according to the related art, and FIG. 2 is a cross-sectional view illustrating the button-type secondary battery according to the related art.

Referring to FIGS. 1 and 2, the button-type secondary battery 1 according to the related art, particularly a seam-welding type button-type secondary battery 1 has a structure, in which an electrode assembly 20 is inserted into an inner space of a body of a can body 10, and a top cap assembly 30 covers an opening of the can body 10. The top cap assembly 30 may include a base plate, a positive electrode terminal provided on the base plate, and an insulating member provided between the base plate and the positive electrode terminal.

A circumferential area of the top cap assembly 30 is coupled to the can body 10 in a seam welding manner. However, according to the related art, since the positive electrode terminal is provided on an upper portion of the base plate having the flat plate shape, a stepped portion occurs between the base plate and the positive electrode terminal, and as a result, welding with an external tab becomes unstable to cause warpage or deterioration in attachment processibility of the external tab. In addition, when an insulating member or adhesive component material provided between the positive electrode terminal and the base plate is thermally fused or riveted, the insulating member or adhesive component material may flow outward to be disposed close to a seam welding part, thereby causing welding defects and a decrease in assembly yield.
CN 212 434 725 U relates to a button battery, which includes a casing, a battery core, and a conductive element.
CN 108 232 051 A relates to a button battery comprising a housing and an electrode isolation assembly disposed in the housing.

### DISCLOSURE OF THE INVENTION

### TECHNICAL PROBLEM

The present invention has been made to solve the above problems, and an object of the present invention is to provide a top cap assembly in which a stepped portion between a base plate and an electrode terminal is removed, and a welding point ascends to improve welding quality and assembly yield of the battery and minimize damage of an electrode assembly due to welding heat, thereby securing quality and stability of the battery, and a button-type secondary battery including the same.

### TECHNICAL SOLUTION

The present invention is defined by the button-type secondary battery according to claim 1 and the top cap assembly according to independent claim 9. Other preferred features are recited in the dependent claims. A button-type secondary battery having a diameter greater than a height thereof includes: a can body which has an opened upper end and in which an accommodation space is formed; an electrode assembly accommodated in the accommodation space of the can body; and a top cap assembly configured to cover the upper end of the can body and coupled to the can body, wherein the top cap assembly includes: a base plate having a flat plate shape and bent upward from a circumferential area thereof; an electrode terminal having a flat plate shape so as to be seated on an upper portion of the base plate, wherein the electrode terminal comprises a protrusion protruding downward from a central area thereof;
and an insulating member provided between the base plate and the electrode terminal.

The base plate includes: a seating part on which the electrode terminal is seated; an insertion hole formed to vertically pass through a central area of the seating part; and a bent part bent upward from a circumferential area of the seating part.

The protrusion may be inserted into the insertion hole.

The top cap assembly is provided inside an upper end of the can body, and wherein an upper end of the bent part is formed to have the same height as the upper end of the can body.

The top cap assembly may be coupled to the can body by welding, wherein the upper end of the can body and the upper end of the bent part may be welded to each other at a point at which the upper end of the can body and the upper end of the bent part have the same height.

The upper end of the bent part may be formed to have the same height as a top surface of the electrode terminal.

The bent part may be formed to surround a circumferential area of the electrode terminal from the outside, wherein the bent part may be provided to be spaced a predetermined distance from the electrode terminal.

The top cap assembly may further include a ring gasket provided below the base plate.

The electrode assembly may be formed by alternately disposing a positive electrode, a separator, a negative electrode, and a separator, the electrode terminal may be electrically connected to the positive electrode of the electrode assembly, and the can body and the base plate may be electrically connected to the negative electrode of the electrode assembly.

The bent part may have a notch groove having a shape that is recessed in a direction away from a center of the seating part.

The top cap assembly according to the present invention is a top cap assembly for a button-type secondary battery having a diameter greater than a height thereof includes: a base plate having a flat plate shape and bent upward from a circumferential area thereof; an electrode terminal having a flat plate shape so as to be seated on an upper portion of the base plate, wherein the electrode terminal includes a protrusion protruding downward from a central area thereof; and an insulating member provided between the base plate and the electrode terminal.

The base plate includes: a seating part on which the electrode terminal is seated; an insertion hole formed to vertically pass through a central area of the seating part; and a bent part bent upward from a circumferential area of the seating part.

The bent part may have a notch groove having a shape that is recessed in a direction away from a center of the seating part.

### ADVANTAGEOUS EFFECTS

The button-type secondary battery according to the present invention, which has the height greater than the diameter thereof, includes the can body which has an opened upper end and in which an accommodation space is formed, the electrode assembly accommodated in the accommodation space of the can body, and the top cap assembly covering the upper end of the can body and coupled to the can body. The top cap assembly includes the base plate formed in the flat plate shape and bent upward from the circumferential area thereof, and the electrode terminal having the flat plate shape, seated on the base plate, and having the protrusion protruding downward from the central area thereof, and the insulating member provided between the base plate and the electrode terminal. As a result, the stepped portion between the base plate and the electrode terminal may be removed, and the welding point may ascend to improve the welding quality and the assembly yield of the battery and minimize the damage of the electrode assembly due to the welding heat, thereby securing the quality and stability of the battery.

### BRIEF DESCRIPTION OF THE DRAWINGS

FIG. 1 is perspective and side views of a button-type secondary battery according to a related art.
FIG. 2 is a cross-sectional view of the button-type secondary battery according to the related art.
FIG. 3 is an enlarged cross-sectional view illustrating a button-type secondary battery and a portion of a circumferential area of the button-type secondary battery according to Embodiment 1 of the present invention.
FIG. 4 is an enlarged cross-sectional view illustrating a button-type secondary battery and a portion of a circumferential area of the button-type secondary battery according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

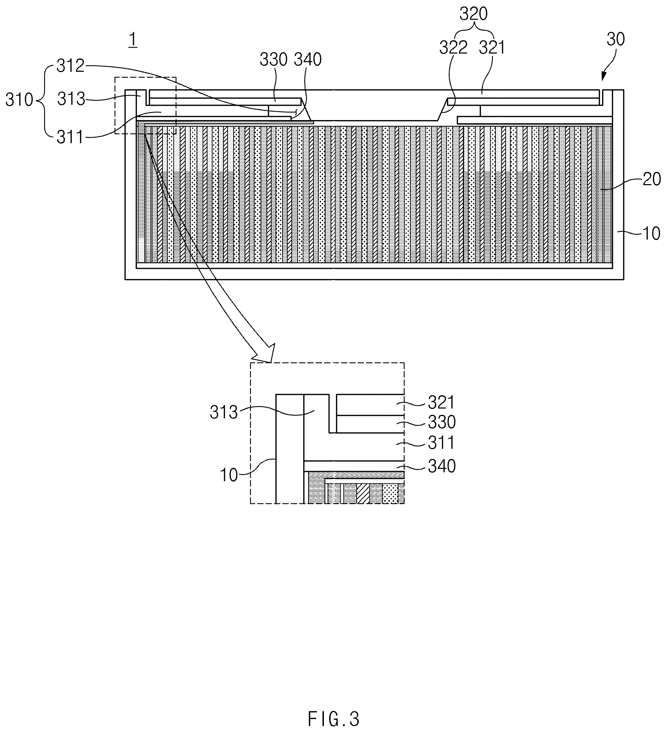

FIG. 3 is an enlarged cross-sectional view illustrating a button-type secondary battery and a portion of a circumferential area of the button-type secondary battery according to an embodiment of the present invention.

Referring to FIG. 3, a button-type secondary battery 1 according to Embodiment 1 of the present invention includes a can body 10, an electrode assembly 20, and a top cap assembly 30. Here, the button-type secondary battery 1 may mean a secondary battery having a diameter greater than a height thereof.

First, the electrode assembly 20 may be formed by alternately disposing a positive electrode, a separator, a negative electrode, and a separator, and be a jell roll-type electrode assembly 20 having a shape in which electrodes and the separators are alternately disposed to be wound. The electrode assembly 20 may be an electrode wound body in which one or more positive electrodes, one or more negative electrodes, and one or more separators are wound on each other.

The can body 10 may have an opened upper end and a storage space formed therein, and the electrode assembly 20 may be accommodated in the storage space of the can body 10. In detail, the electrode assembly 20 may be inserted vertically into the storage space of the can body 10, and that being inserted vertically means that the electrode assembly 20 is inserted so that a winding axis of the electrode assembly 20 is perpendicular to a bottom part of the can body 10. Thus, the can body 10 may have a structure in which an upper end is open and which includes a bottom part and a sidewall part.

Next, the top cap assembly 30 may cover the opened upper end of the can body 10 and be coupled to the can body 10 and may include a base plate 310, an electrode terminal 320, and an insulating member 330. Here, the top cap assembly 30 may be manufactured by first assembling or coupling components of the top cap assembly 30 and then be coupled to the can body 10, in which the electrode assembly 20 is accommodated, and thus, may be assembled as the button-type secondary battery 1. Here, the top cap assembly 30 and the can body 10 may be coupled to each other by laser welding, and more specifically, seam welding, which is advantageous in preventing a welding pin hole from occurring.

The base plate 310 may be formed in a flat plate shape and be bent upward from a circumferential area, and the electrode terminal 320 may be formed in a flat plate shape so as to be seated on the upper portion of the base plate 310 and may have a protrusion 322 that protrudes downward from a central area thereof. Detailed configurations of the base plate 310 and the electrode terminal 320 will be described later.

The insulating member 330 may be provided between the base plate 310 and the electrode terminal 320 to block electrical connection between the base plate 310 and the electrode terminal 320. The electrode terminal 320 may be electrically connected to a positive electrode of the electrode assembly 20 by a positive electrode tab, and the can body 10 and the base plate 310 coupled to the can body by the welding may be electrically connected to a negative electrode of the electrode assembly by a negative electrode tab to serve as the battery. However, it is not necessarily limited thereto. On the other hand, the electrode terminal 320 may be electrically connected to the negative electrode of the electrode assembly 20 by the negative electrode tab, and the can body 10 and the base plate 310 coupled to the can body may be electrically connected to the positive electrode by the positive electrode tab. As described above, since the electrode terminal 320 has a polarity opposite to that of the can body 10 or the base plate 310, short circuit may occur when the electrode terminal 320 is in direct contact with the can body 10 or the base plate 310, and thus, the above-described insulating member 330 may be provided between the base plate 310 and the electrode terminal 320 to secure safety of the battery. The insulating member 330 may be formed in a ring shape and may be selected from a material capable of performing an insulating function.

As described above, in the button-type secondary battery 1 according to the present invention, the base plate 310 may be bent upward from a circumferential area thereof to remove a stepped portion formed between the base plate 310 and the electrode terminal 320 and allow a welding point of the can body 10 and the base plate 310 to ascend to minimize damage of the electrode assembly due to welding heat. In addition, even if the insulating member 330 or the adhesive component flows out by the welding, it does not affect the welding point due to the shape that is bent upward, and as a result, the welding quality may be improved to improve assembly yield of the button-type secondary battery 1.

Hereinafter, each constitution of the top cap assembly 30 and a coupling structure between the top cap assembly 30 and the can body 10 will be described in detail.

First, the base plate 310 may include a seating part 311 on which the electrode terminal 320 is seated, an insertion hole 312 formed to vertically pass through a central area of the seating part 311, and a bent part 313 bent upward from the circumferential area of the seating part 311. The base plate 310 may be made of a metal material, and the metal material may be any one or more selected from SUS, nickel-plated carbon steel, and Al. As described above, in the button-type secondary battery 1 according to the present invention, since the base plate 310 includes the bent part 313, the electrode terminal 320 may be stably seated on the seating part 311 without being separated, and the welding point may ascend. In addition, the electrode terminal 320, the insulating member 330, and the base plate 310 may be bonded by thermal fusion, and the base plate 310 may be coupled to the can body 10 by the welding. Here, even if the insulating member 330 is melted due to heat, the welded portion may not be affected due to the bent part 313 to secure uniform welding quality.

The configuration of the bent part 313 will be described in detail. The top cap assembly 30 may be provided inside an upper end of the can body 10, and an upper end of the bent part 313 may be formed to have a height equal to that of the upper end of the can body 10. Here, that being formed to have the same height may mean that the upper end of the can body 10 and the upper end of the bent part 313 are coupled to each other to match each other as described above when the top cap assembly 30 is provided inside the upper end of the can body 10. As a result, when the button-type secondary battery 1 is viewed in the side or plan view, it may mean that the can body 10 and the bent part 313 are coupled so that a stepped portion therebetween does not occur. In this state, the top cap assembly 30 may be welded to the can body 10 at a point at which the upper end of the can body 10 and the upper end of the bent part 313 have the same height. That is, the upper end of the bent part 313, which is bent upward, may be welded to match the upper end of the can body 10, and thus, the welding point may ascend compared to the button-type secondary battery (see FIG. 2) according to the related art. As a result, even if the materials of the insulating member or the adhesion (adhesive) component are melted by the welding heat, the materials may be in contact with the side surface of the bent part so as not to affect a top surface of the bent part, which is the welding point, thereby minimizing the welding defects. In addition, since the welding point ascends to move away from the electrode assembly 20, the damage to the electrode assembly 20 due to the welding heat may be minimized to secure performance and safety of the battery.

The electrode terminal 320 may be configured to be connected to the electrode of the electrode assembly 20 through the electrode tab of the base plate 310 and thus be a portion of the battery, at which the terminal connected to the external device is formed. The electrode terminal 320 may be made of a metal material, and the metal material may be any one or more selected from SUS, nickel-plated carbon steel, and Al.

In addition, the electrode terminal 320 may include a terminal plate part 321 having a flat plate shape and a protrusion 322 protruding downward from a central area of the terminal plate part 321, and the protrusion 322 of the electrode terminal 320 may be inserted into an insertion hole 312. The protrusion 322 of the electrode terminal 320 may have a shape of which a diameter of a cross-section gradually decreases in a direction closer to the electrode assembly 20. As a result, the protrusion 322 may be easily inserted into the insertion hole 312 so that the electrode terminal 320 is stably seated on the base plate 310. However, it is not necessarily limited thereto, and the diameter of the cross-section of the protrusion 322 may gradually increase in a direction toward the electrode assembly 20.

The upper end of the bent part 313 may be formed to have the same height as the top surface of the electrode terminal 320. That is, the upper end of the bent part 313 may be welded in the state of matching the upper end of the can body 10 and be formed to have the same height as the top surface of the electrode terminal 320 so that the stepped portion is not finally formed on the top surface of the button-type secondary battery 1. When the stepped portion occurs, the welding with the external tab may be unstable to cause warpage, and attachment processibility of the external tab may be significantly deteriorated. However, in the present invention, the occurrence of the stepped portion may be minimized to improve the attachment processibility of the external tab.

In addition, the bent part 313 may be formed to surround the circumference of the electrode terminal 320 from the outside and may be spaced a predetermined distance from the electrode terminal 320. The bent part 313, which is one component of the base plate 310, may have a polarity different from that of the electrode terminal 320. Since the bent part 313 and the electrode terminal 320 are spaced apart from each other, the electrode terminal 320 and the base plate 310 may be insulated from each other to prevent short circuit from occurring, and also, even if the insulating member or the adhesive material or adhesion component is melted to flow by the welding or the fusion heat, a process may be provided so as not to affect the welded portion. Here, the predetermined distance may mean a distance or space that is sufficient to insulate the electrode terminal 320 and the base plate 310 from each other and to accommodate the melted insulating member or adhesive material.

The top cap assembly 30 may further include a ring gasket 340 provided under the base plate 310. The ring gasket 340 may be provided under the base plate 310, and more specifically, may be attached to a bottom surface of the base plate 310 to insulate the bottom surface of the base plate 310. That is, the ring gasket 340 may insulate the base plate 310 from the electrode tab or the base plate 310 from the electrode assembly 20. As described above, the ring gasket 340 may be provided under the base plate 310 to perform the insulation.

### Embodiment 2

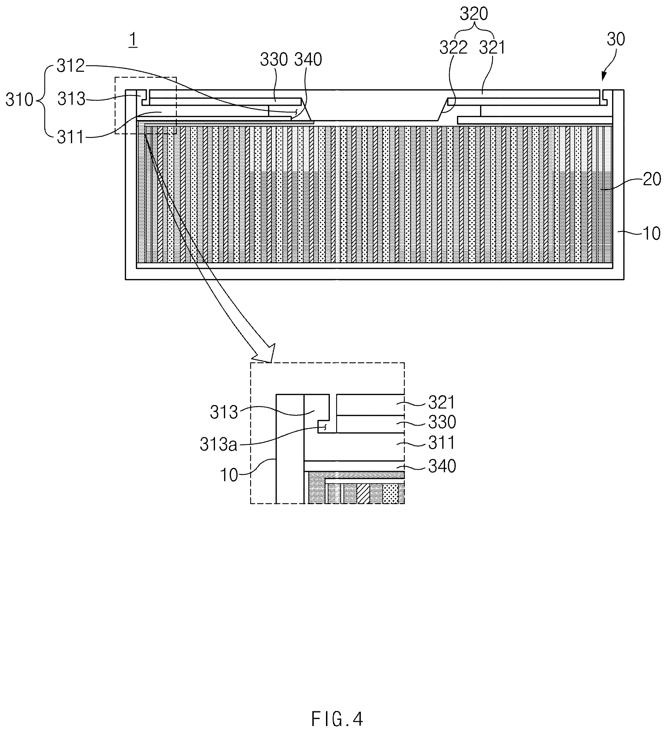

FIG. 4 is an enlarged cross-sectional view illustrating a button-type secondary battery and a portion of a circumferential area of the button-type secondary battery according to Embodiment 2 of the present invention.

Embodiment 2 of the present invention is different from Embodiment 1 in that a notch groove 313a is formed in the bent part 313 according to Embodiment 1. The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

Referring to FIG. 4, a bent part 313 according to Embodiment 2 of the present invention may have a notch groove 313a recessed in a direction that is away from a center of a seating part 311.

In detail, the bent part 313 may be formed to be bent upward from a top surface of the seating part 311, and a bottom surface of the notching groove 313a may be formed at the same height as the top surface of the seating part 311 and a shape that is recessed in a direction away from a center of the seating part 311. In addition, a position of a top surface of the notch groove 313a is not particularly limited, but since the can body 10 and the bent part 313 are coupled to each other by laser welding on the top surface of the bent part 313, the bent part 313 may be formed at a position sufficient to secure supporting force by being coupled to the can body 10 by the welding without destroying the structure.

In addition, the notch groove 313a may be determined according to the shape of the base plate 310, and preferably, when the base plate 310 is formed in a ring shape, the notch groove 313a may also be formed in a ring shape.

As described above, the button-type secondary battery 1 according to Embodiment 2 of the present invention may further include the notch groove 313a. As a result, even if the melted insulating member 330 or adhesion (adhesive) component flows down while the top cap assembly 30 is thermally fused, or the top cap assembly 30 and the can body 10 are welded to each other, there is an effect of trapping a portion of the melted insulating member 330 or adhesion (adhesive) component, and thus, an effect on a welded portion may be minimized to improve welding quality. In addition, the adhesive material may not be directly exposed to an outer surface of the button-type secondary battery to improve the quality of the button-type secondary battery as a whole.

### [Description of the Symbols]

- 1:: Button-type secondary battery
- 10:: Can body
- 20:: Electrode assembly
- 30:: Top cap assembly
- 310:: Base plate
- 311:: Seating part
- 312:: Insertion hole
- 313:: Bent part
- 313a:: Notch groove
- 320:: Electrode terminal
- 321:: Terminal plate part
- 322:: Protrusion
- 330:: Insulating member
- 340:: Ring gasket

## Claims

1. A button-type secondary battery (1) having a diameter greater than a height thereof, the button type secondary battery (1) comprising:
a can body (10) which has an opened upper end and in which an accommodation space is formed;
an electrode assembly (20) accommodated in the accommodation space of the can body (10); and
a top cap assembly (30) configured to cover the upper end of the can body (10) and coupled to the can body (10),
wherein the top cap assembly (30) comprises:
a base plate (310) having a flat plate shape and bent upward from a circumferential area thereof;
an electrode terminal (320) having a flat plate shape so as to be seated on an upper portion of the base plate (310), wherein the electrode terminal (320) comprises a protrusion (322) protruding downward from a central area thereof; and
an insulating member (330) provided between the base plate (310) and the electrode terminal (320),
wherein the base plate (310) comprises:
a seating part (311) on which the electrode terminal (320) is seated;
an insertion hole (312) formed to vertically pass through a central area of the seating part (311); and
a bent part (313) bent upward from a circumferential area of the seating part (311),
wherein the top cap assembly (30) is provided inside the upper end of the can body (10), and
wherein an upper end of the bent part (313) is formed to have the same height as the upper end of the can body (10).

2. The button-type secondary battery (1) of claim **1,** wherein the protrusion (322) is inserted into the insertion hole (312).

3. The button-type secondary battery (1) of claim 1 or 2, wherein the top cap assembly (30) is coupled to the can body (10) by welding,
wherein the upper end of the can body (10) and the upper end of the bent part (313) are welded to each other at a point at which the upper end of the can body (10) and the upper end of the bent part (313) have the same height.

4. The button-type secondary battery (1) of any one of claims 1-3, wherein the upper end of the bent part (313) is formed to have the same height as a top surface of the electrode terminal (320).

5. The button-type secondary battery (1) of any one of claims 1-4, wherein the bent part (313) is formed to surround a circumferential area of the electrode terminal (320) from the outside,
wherein the bent part (313) is provided to be spaced a predetermined distance from the electrode terminal (320).

6. The button-type secondary battery (1) of any one of claims 1-5, wherein the top cap assembly (30) further comprises a ring gasket (340) provided below the base plate (310).

7. The button-type secondary battery (1) of any one of claims 1-6, wherein the electrode assembly (20) is formed by alternately disposing a positive electrode, a separator, a negative electrode, and a separator,
the electrode terminal (320) is electrically connected to the positive electrode of the electrode assembly (20), and
the can body (10) and the base plate (310) are electrically connected to the negative electrode of the electrode assembly (20).

8. The button-type secondary battery (1) of any one of claims 1-7, wherein the bent part (313) has a notch groove (313a) having a shape that is recessed in a direction away from a center of the seating part (311).

9. A top cap assembly (30) for a button-type secondary battery (1) having a diameter greater than a height thereof and comprising a can body (10) which has an opened upper end and in which an accommodation space is formed, the top cap assembly (30) comprising:
a base plate (310) having a flat plate shape and bent upward from a circumferential area thereof;
an electrode terminal (320) having a flat plate shape so as to be seated on an upper portion of the base plate (310), wherein the electrode terminal (320) comprises a protrusion (322) protruding downward from a central area thereof; and
an insulating member (330) provided between the base plate (310) and the electrode terminal (320),
wherein the base plate (310) comprises:
a seating part (311) on which the electrode terminal (320) is seated;
an insertion hole (312) formed to vertically pass through a central area of the seating part (311); and
a bent part (313) bent upward from a circumferential area of the seating part (311),
wherein the top cap assembly (30) is configured to be provided inside the upper end of the can body (10), and
wherein an upper end of the bent part (313) is configured to be formed to have the same height as the upper end of the can body (10).

10. The top cap assembly (30) of claim 9, wherein the bent part (313) has a notch groove (313a) having a shape that is recessed in a direction away from a center of the seating part (311).

## Patentansprüche

1. Knopfartige Sekundärbatterie (1) mit einem Durchmesser, der größer ist als ihre Höhe, wobei die knopfartige Sekundärbatterie (1) Folgendes umfasst:
einen Dosenkörper (10), der ein geöffnetes oberes Ende aufweist und in dem ein Aufnahmeraum gebildet ist;
eine Elektrodenanordnung (20), die in dem Aufnahmeraum des Dosenkörpers (10) aufgenommen ist; und
eine Oberkappenanordnung (30), die zur Abdeckung des oberen Endes des Dosenkörpers (10) ausgebildet ist und die mit dem Dosenkörper (10) gekoppelt ist,
wobei die Oberkappenanordnung (30) Folgendes umfasst:
eine Grundplatte (310) mit einer flachen Plattenform und von einem Umfangsbereich davon nach oben gebogen;
einen Elektrodenanschluss (320) mit einer flachen Plattenform, um auf einem oberen Abschnitt der Grundplatte (310) aufzuliegen, wobei der Elektrodenanschluss (320) einen Vorsprung (322) umfasst, der von einem zentralen Bereich davon nach unten vorsteht; und
ein Isolierelement (330), das zwischen der Grundplatte (310) und dem Elektrodenanschluss (320) bereitgestellt ist,
wobei die Grundplatte (310) Folgendes umfasst:
einen Sitzabschnitt (311), auf dem der Elektrodenanschluss (320) sitzt;
ein Einführloch (312), das gebildet ist, um einen zentralen Bereich des Sitzabschnitts (311) vertikal zu durchlaufen; und
einen Biegeabschnitt (313), der von einem Umfangsbereich des Sitzabschnitts (311) nach oben gebogen ist,
wobei die Oberkappenanordnung (30) innerhalb des oberen Endes des Dosenkörpers (10) bereitgestellt ist, und
wobei ein oberes Ende des Biegeabschnitts (313) so gebildet ist, dass es dieselbe Höhe wie das obere Ende des Dosenkörpers (10) aufweist.

2. Knopfartige Sekundärbatterie (1) nach Anspruch 1, wobei der Vorsprung (322) in das Einführloch (312) eingesetzt ist.

3. Knopfartige Sekundärbatterie (1) nach Anspruch 1 oder 2, wobei die Oberkappenanordnung (30) durch Schweißen mit dem Dosenkörper (10) gekoppelt ist,
wobei das obere Ende des Dosenkörpers (10) und das obere Ende des Biegeabschnitts (313) an einem Punkt miteinander verschweißt sind, an dem das obere Ende des Dosenkörpers (10) und das obere Ende des Biegeabschnitts (313) dieselbe Höhe aufweisen.

4. Knopfartige Sekundärbatterie (1) nach einem der Ansprüche 1-3, wobei das obere Ende des Biegeabschnitts (313) so gebildet ist, dass es dieselbe Höhe wie eine Oberseite des Elektrodenanschlusses (320) aufweist.

5. Knopfartige Sekundärbatterie (1) nach einem der Ansprüche 1-4, wobei der Biegeabschnitt (313) so gebildet ist, dass er einen Umfangsbereich des Elektrodenanschlusses (320) von außen umgibt,
wobei der Biegeabschnitt (313) bereitgestellt ist, um in einem vorbestimmten Abstand vom Elektrodenanschluss (320) beabstandet zu sein.

6. Knopfartige Sekundärbatterie (1) nach einem der Ansprüche 1-5, wobei die Oberkappenanordnung (30) weiter eine Ringdichtung (340) umfasst, die unterhalb der Grundplatte (310) bereitgestellt ist.

7. Knopfartige Sekundärbatterie (1) nach einem der Ansprüche 1-6, wobei die Elektrodenanordnung (20) gebildet ist, indem abwechselnd eine positive Elektrode, ein Separator, eine negative Elektrode und ein Separator angeordnet sind,
der Elektrodenanschluss (320) elektrisch mit der positiven Elektrode der Elektrodenanordnung (20) verbunden ist, und
der Dosenkörper (10) und die Grundplatte (310) elektrisch mit der negativen Elektrode der Elektrodenanordnung (20) verbunden sind.

8. Knopfartige Sekundärbatterie (1) nach einem der Ansprüche 1-7, wobei der Biegeabschnitt (313) eine Kerbnut (313a) aufweist, die eine Form aufweist, die in eine von einem Zentrum des Sitzabschnitts (311) weggerichtete Richtung zurückversetzt ist.

9. Oberkappenanordnung (30) für eine knopfartige Sekundärbatterie (1), die einen Durchmesser aufweist, der größer ist als ihre Höhe, und die einen Dosenkörper (10) umfasst, der ein geöffnetes oberes Ende aufweist und in dem ein Aufnahmeraum gebildet ist, wobei die Oberkappenanordnung (30) Folgendes umfasst:
eine Grundplatte (310) mit einer flachen Plattenform und von einem Umfangsbereich davon nach oben gebogen;
einen Elektrodenanschluss (320) mit einer flachen Plattenform, um auf einem oberen Abschnitt der Grundplatte (310) aufzuliegen, wobei der Elektrodenanschluss (320) einen Vorsprung (322) umfasst, der von einem zentralen Bereich davon nach unten vorsteht; und
ein Isolierelement (330), das zwischen der Grundplatte (310) und dem Elektrodenanschluss (320) bereitgestellt ist,
wobei die Grundplatte (310) Folgendes umfasst:
einen Sitzabschnitt (311), auf dem der Elektrodenanschluss (320) sitzt;
ein Einführloch (312), das gebildet ist, um einen zentralen Bereich des Sitzabschnitts (311) vertikal zu durchlaufen; und
einen Biegeabschnitt (313), der von einem Umfangsbereich des Sitzabschnitts (311) nach oben gebogen ist,
wobei die Oberkappenanordnung (30) dazu ausgebildet ist, innerhalb des oberen Endes des Dosenkörpers (10) bereitgestellt zu sein, und
wobei ein oberes Ende des Biegeabschnitts (313) dazu ausgebildet ist, so gebildet zu sein, dass es dieselbe Höhe wie das obere Ende des Dosenkörpers (10) aufweist.

10. Oberkappenanordnung (30) nach Anspruch 9, wobei der Biegeabschnitt (313) eine Kerbnut (313a) aufweist, die eine Form aufweist, die in eine von einem Zentrum des Sitzabschnitts (311) weggerichtete Richtung zurückversetzt ist.

## Revendications

1. Batterie secondaire (1) de type bouton présentant un diamètre supérieur à une hauteur de celle-ci, la batterie secondaire (1) de type bouton comprenant :
un corps (10) de boîte qui présente une extrémité supérieure ouverte et dans lequel un espace de logement est formé ;
un ensemble électrode (20) logé dans l'espace de logement du corps (10) de boîte ; et
un ensemble capuchon supérieur (30) configuré pour recouvrir l'extrémité supérieure du corps (10) de boîte et couplé au corps (10) de boîte,
dans laquelle l'ensemble capuchon supérieur (30) comprend :
une plaque de base (310) présentant une forme de plaque plate et pliée vers le haut à partir d'une zone circonférentielle de celle-ci ;
une borne (320) d'électrode présentant une forme de plaque plate de manière à être disposée sur une partie supérieure de la plaque de base (310), dans laquelle la borne (320) d'électrode comprend une saillie (322) faisant saillie vers le bas à partir d'une zone centrale de celle-ci ; et
un élément isolant (330) disposé entre la plaque de base (310) et la borne (320) d'électrode,
dans laquelle la plaque de base (310) comprend :
une partie d'appui (311) sur laquelle la borne (320) d'électrode est disposée ;
un trou d'insertion (312) formé pour traverser verticalement une zone centrale de la partie d'appui (311) ; et
une partie pliée (313) qui est pliée vers le haut à partir d'une zone circonférentielle de la partie d'appui (311),
dans laquelle l'ensemble capuchon supérieur (30) est disposé à l'intérieur de l'extrémité supérieure du corps (10) de boîte, et
dans laquelle une extrémité supérieure de la partie pliée (313) est formée pour présenter la même hauteur que l'extrémité supérieure du corps (10) de boîte.

2. Batterie secondaire (1) de type bouton selon la revendication 1, dans laquelle la saillie (322) est insérée dans le trou d'insertion (312).

3. Batterie secondaire (1) de type bouton selon la revendication 1 ou la revendication 2, dans laquelle l'ensemble capuchon supérieur (30) est couplé au corps (10) de boîte par soudage,
dans laquelle l'extrémité supérieure du corps (10) de boîte et l'extrémité supérieure de la partie pliée (313) sont soudées l'une à l'autre en un point auquel l'extrémité supérieure du corps (10) de boîte et l'extrémité supérieure de la partie pliée (313) présentent la même hauteur.

4. Batterie secondaire (1) de type bouton selon l'une quelconque des revendications 1 à 3, dans laquelle l'extrémité supérieure de la partie pliée (313) est formée pour présenter la même hauteur qu'une surface supérieure de la borne (320) d'électrode.

5. Batterie secondaire (1) de type bouton selon l'une quelconque des revendications 1 à 4, dans laquelle la partie pliée (313) est formée pour entourer une zone circonférentielle de la borne (320) d'électrode depuis l'extérieur,
dans laquelle la partie pliée (313) est disposée de manière à être espacée d'une distance prédéterminée de la borne (320) d'électrode.

6. Batterie secondaire (1) de type bouton selon l'une quelconque des revendications 1 à 5, dans laquelle l'ensemble capuchon supérieur (30) comprend en outre un joint annulaire (340) disposé au-dessous de la plaque de base (310).

7. Batterie secondaire (1) de type bouton selon l'une quelconque des revendications 1 à 6, dans laquelle l'ensemble électrode (20) est formé en disposant alternativement une électrode positive, un séparateur, une électrode négative et un séparateur,
la borne (320) d'électrode est reliée électriquement à l'électrode positive de l'ensemble électrode (20), et
le corps (10) de boîte et la plaque de base (310) sont reliés électriquement à l'électrode négative de l'ensemble électrode (20).

8. Batterie secondaire (1) de type bouton selon l'une quelconque des revendications 1 à 7, dans laquelle la partie pliée (313) présente une rainure (313a) d'encoche présentant une forme qui est évidée dans une direction s'éloignant d'un centre de la partie d'appui (311).

9. Ensemble capuchon supérieur (30) pour une batterie secondaire (1) de type bouton présentant un diamètre supérieur à une hauteur de celle-ci et comprenant un corps (10) de boîte qui présente une extrémité supérieure ouverte et dans lequel un espace de logement est formé, l'ensemble capuchon supérieur (30) comprenant :
une plaque de base (310) présentant une forme de plaque plate et pliée vers le haut à partir d'une zone circonférentielle de celle-ci ;
une borne (320) d'électrode présentant une forme de plaque plate de manière à être disposée sur une partie supérieure de la plaque de base (310), dans lequel la borne (320) d'électrode comprend une saillie (322) faisant saillie vers le bas à partir d'une zone centrale de celle-ci ; et
un élément isolant (330) disposé entre la plaque de base (310) et la borne (320) d'électrode,
dans lequel la plaque de base (310) comprend :
une partie d'appui (311) sur laquelle la borne (320) d'électrode est disposée ;
un trou d'insertion (312) formé pour traverser verticalement une zone centrale de la partie d'appui (311) ; et
une partie pliée (313) qui est pliée vers le haut à partir d'une zone circonférentielle de la partie d'appui (311),
dans lequel l'ensemble capuchon supérieur (30) est configuré pour être disposé à l'intérieur de l'extrémité supérieure du corps (10) de boîte, et
dans lequel une extrémité supérieure de la partie pliée (313) est configurée pour être formée pour présenter la même hauteur que l'extrémité supérieure du corps (10) de boîte.

10. Ensemble capuchon supérieur (30) selon la revendication 9, dans lequel la partie pliée (313) présente une rainure (313a) d'encoche présentant une forme qui est évidée dans une direction s'éloignant d'un centre de la partie d'appui (311).
